# EUROPEAN PATENT SPECIFICATION

(11) **EP 0 315 592 B1**
(45) Date of publication and mention of the grant of the patent: **12.05.1993**
(21) Application number: 88830403.7
(22) Date of filing: 05.10.1988
(51) Int. Cl.: B32B 17/10, C03C 27/12

(54) **Apparatus for the pressing of laminated glass/plastic composites**
Vorrichtung zum Pressen von laminierten Glas/Kunststoff-Verbundstoffen
Dispositif de pressage de laminé composite de verre/matière plastique

(30) Priority: 05.11.1987 IT 4857987
(43) Date of publication of application: 10.05.1989
(73) Proprietor: SOCIETA' ITALIANA VETRO- SIV-SpA, 66050 San Salvo (Chieti) (IT)
(72) Inventor: De Leonibus, Vittore, I-66054 Vasto CH. (IT); Pascale, Carmine, I-66054 Vasto CH. (IT)
(74) Representative: Bazzichelli, Alfredo

(56) References cited:
- BE-A- 693 448
- DE-B- 2 602 622
- US-A- 3 250 211
- US-A- 4 470 858

## Description

The present invention relates to the manufacture of laminated safety glasses for automobile vehicles and more particularly to an apparatus for the pressing of laminated glass/plastic composites of a highly curved shape and with side wings sharply bent in the direction of the concave side of the composite. The apparatus can be used in an automatically operated plant for the manufacture of laminated safety glass, comprising means for the mechanical pressing of the glass/plastic composite and handling means for moving the composite into and out of the press.

It is well known that laminated safety glass, particularly that used in windows of automobiles or other vehicles, comprises two curved sheets of glass and a layer of plastic interposed therebetween, which acts as an adhesive for the two sheets of glass.

In the following this glass/plastic composite will be indicated by the term "sheet of glass".

In the manufacturing process of such a product, a step is provided for mechanically pressing together the sheets of glass and the plastic layer, in order to expel any air contained therebetween, and bonding the edges. This prevents, in a successive autoclave treatment at a controlled temperature and pressure, an undesirable air penetration which could detach the glass and plastic layers from each other.

Apparatuses for carrying out this pressing step are well known in the prior art. Generally such apparatuses comprise a set of horizontally arranged pressing rolls, mounted in a cage arranged so as to be angularly shifted along a curved path.

In apparatuses of this type the sheet of glass enters horizontally between the rolls and while these are pressing the glass, the mounting cage rotates horizontally about its own axis so as to lay the sheet of glass on a discharging conveyor.

It is necessary that the sheet of glass be fed to the pressing rolls at a properly set entry angle to prevent the sheet from being broken. To this end manpower is provided for manually aiding the sheet to enter at the proper angle, or otherwise automatic centering devices are used.

In a cycle of manufacture of laminated safety glass, there are generally two pressing steps: the first one serves the purpose of expelling the air trapped between the layers and the second one is for bonding the edges after subjecting the sheet of glass to light heating for softening the intermediate plastic layer.

The first of the two pressing steps is carried out in a horizontal position since the adherence between the glass and plastic layers is not yet sufficently sure.

It is also known from document US-A-4 470 858 an apparatus for the pressing of laminated glass/plastic composites comprising rollers for the mechanical pressing of the composites having their axis of rotation placed in a direction perpendicular to the horizontal transport plane along which the glass/plastic composites are moved during the working operations carried out prior to the pressing.

In this known apparatus, however, the handling means have an axis of rotation (coinciding with the side edges 312, 312: see Fig. 25) in the direction of the said transport plane, followed by a translation movement in said direction.

In recent years glass for automotive vehicles, particularly windscreens and rear windows, has become increasingly curved and the wings, for aerodynamical and aesthetic reasons, are strongly bent in the direction of the concave surface of the glass window.

Consequently a horizontal pressing apparatus, such as previously described and known from the Italian patent No. 1142562, results in a high risk of breaking the glass, even when manpower is present. In fact, it can be easily understood that, when a strongly bent wing enters the pressing rolls, all the windscreen weight is discharged on the entry line with risk of breaking the glass.

The automatic centering device itself cannot avoid such a risk either.

An object of the present invention is to eliminate the above mentioned drawback.

The present invention solves the problem of pressing, without the aid of manpower, laminated sheets of glass with a very small radius and wings strongly bent to the inside of the glass window, by providing an apparatus able to carry out pressing operations in a vertical direction and feeding and removing operations in complete absence of manpower.

It has been in fact surprisingly found that in contrast to what was taken for granted so far in the prior art, the adhesion between the glass and the interposed plastic layer is sufficient to maintain the composite integral and avoid shifting of the single composing elements one with respect to the other, whenever the time for which it remains standing in the vertical position is very short. Consequently the vertical pressing can also be carried out in the first step of expulsion of air from the composite, by means of an apparatus making the standing time of the composite on the vertical very short, and providing entry of the sheet very swiftly into the vertical pressing rolls.

Using an apparatus of this type, the following advantages are obtained: a reduction of the stresses involving the wings, regularity and uniformity of pressing by virtue of the smooth operation of the machine.

The advantages obtained by the present invention substantially consist in the possibility of pressing highly curved pieces with no use of manpower and thus obtaining a considerable decrease of the production costs.

Object of the present invention is an apparatus for pressing a laminated glass/plastic composite having a highly curved shape and side wings strongly bent in the direction of the concave surface of the composite, having the features specified in independant claim 1. Dependant claims 2 to 5 represent preferred embodiments of the apparatus of the invention.

The invention will be described in greater detail in the following, with reference to an embodiment illustrated in the drawings, in which:
figure 1 represents a diagrammatic side view of the apparatus according to the invention;
figure 2 is a diagrammatic side view of the automatic feeding device of the pressing machine;
figure 3 is a diagrammatic side view of the automatic removing device of the pressing machine;
figure 4 is a diagrammatic side view of the automatic feeding and/or removing device;
figure 5 is a diagrammatic side view of the pressing apparatus according to the present invention;
figure 6 is a diagrammatic side view of the mechanical linkage of the pressing apparatus;
figure 7 is a cross sectional view along the line A-A of the pressing device of figure 5; and
figure 8 is a cross sectional view along the line B-B of the pressing apparatus of figure 7.

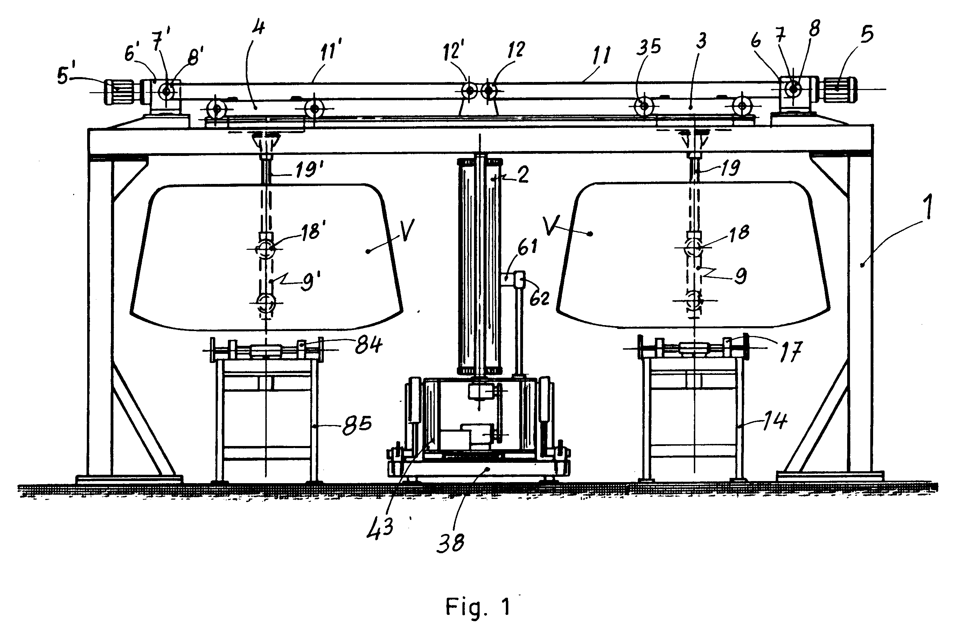

Referring to figures 1-8, a framework 1 supports a feeding carriage 3 and a removing carriage 4. Vertical pressing rolls 2 are placed between said carriages.

Motors 5 and 5′ through speed reducers 6 and 6′ and shafts 7 and 7′ transmit motion to pulleys 8 and 8′ and to toothed belts 11 and 11′ which are connected to the carriages 3 and 4 respectively. Tension pulleys 12 and 12′ tension the belts 11 and 11′.

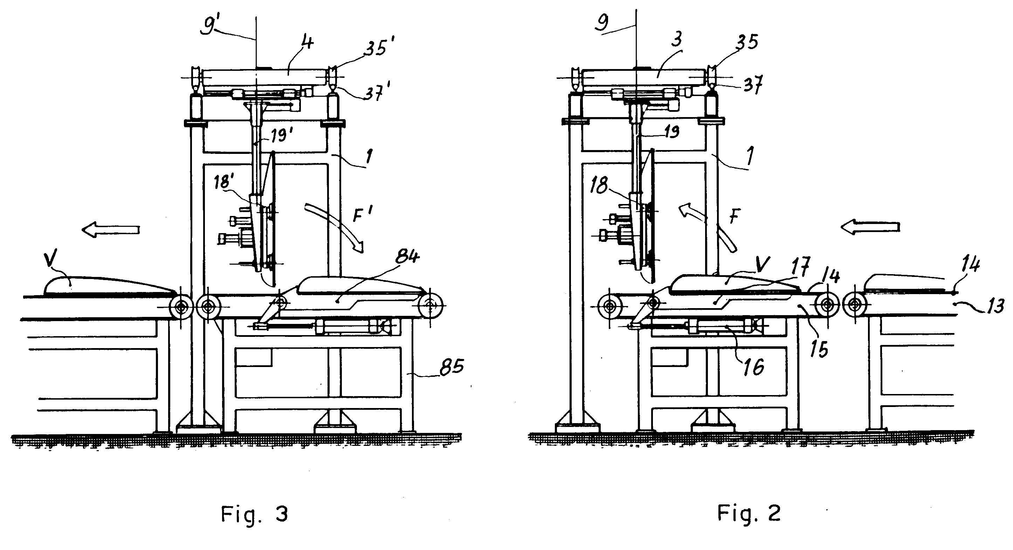

As shown in figure 2 a conveyor 13 horizontally transports a sheet of glass V on conveying belts 14 to a conveyor 15, where the sheet V stops.

A pneumatic piston 16 placed under the conveying belts actuates a tipping device 17 which rotates to the direction of arrow F, placing the sheet V in a vertical position.

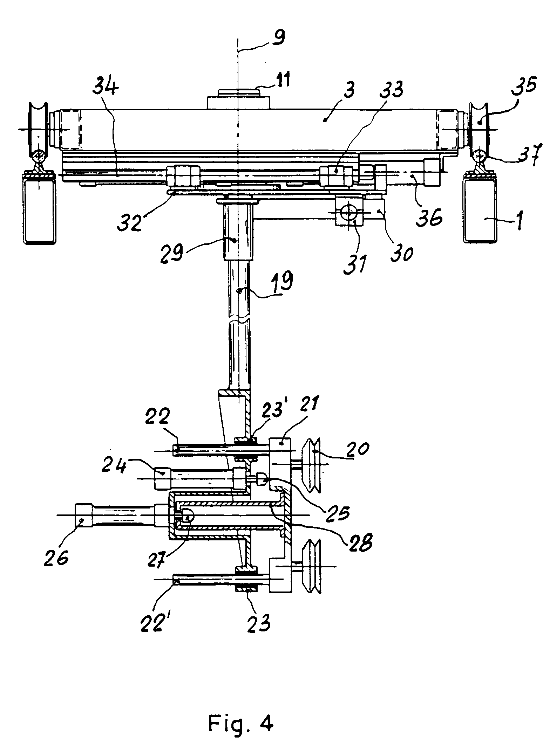

A suction cup unit 18 is connected to the carriage 3 through a shaft 19. This unit comprises suction cups 20 (figure 4) mounted on a support 21 on which two sliding shafts 22 and 22′ are welded opposite to the cups 20, said shafts being able to slide in supports 23 and 23′.

A pneumatic piston 24 behind the support 21 is provided with a rod 25, which causes the support 21 to move towards the sheet of glass V. A pneumatic piston 26 has a rod 27 inserted into a sliding sleeve 28. The rod 27 causes the support 21 to move back after the sheet of glass has been taken by the suction cups 20.

The shaft 19 is rotatably mounted on a movable platform 32 by means of a vertical pivot journal 29. A lever 30 for blocking rotation is connected to the shaft 19 and is controlled by a pneumatic piston 31 welded to the platform 32.

The suction cup unit 18 and the shaft 19 are able to move transversally to the direction of carriage 3 in that the platform 32, on which the shaft 19 is journalled, is provided with supports 33 capable of sliding on a guide 34.

A piston 36 rigid to the carriage 3, controls the transverse movement of the platform 32.

The carriage 3 is able to run on rails 37 in a longitudinal direction, through wheels 35. Consequently, the suction cup unit 18 is able to move both in a transverse and a longitudinal direction and moreover it can revolve around the axis 9 of the shaft 19.

The above illustrated degrees of freedom enable the suction cup unit 18 to take the sheet of glass V from the tipping device 17 and bring it swiftly to the pressing rolls 2.

A microprocessor of known type, which is not part of the present invention, controls the operation sequence causing the suction cup unit 18 to be placed at a desired angle to the rolls 2, so that the entry of the sheet of glass V into said rolls is effected without risk of breaking and as smoothly as possible.

As said, the sheet V moves forwards horizontally along the conveyor 13 and stops in correspondence with the conveyor 15.

The tipping device 17 is raised in a vertical position, while the suction cup unit 18 is already set to take the sheet V.

When the sheet V has been taken by virtue of suction by the cups 20, the carriage 3 is moved transversely. At the same time the shaft 19 rotates vertically around its axis by an angle such that the sheet V is placed at the desired angulation for the best entry between the rolls 2.

Once the sheet V has been delivered to the rolls 2, the carriage 3 and the unit 18 are pre-set back to the position for feeding a successive sheet.

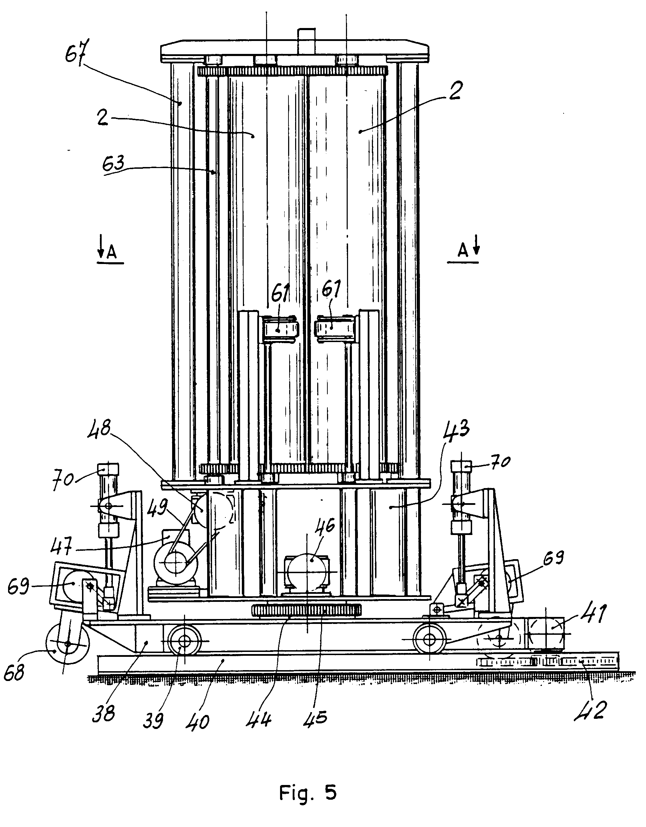

The vertical pressing rolls 2 are sustained by a frame 43 and a supporting structure 67 (figure 5). A second frame 38 is provided with wheels 39 which can run on rails 40 and it supports the frame 43, which is thus able to rotate by 360° around its own axis.

A speed reducer 41 transmits the motion to the frame 38 through a pinion gear (not shown in the figures) meshing with a rack 42.

The rotatable frame 43 rests on a rotatable center stand 44 which meshes, through a gear 45, with a speed reducer 46, through a pinion gear not shown in the figure.

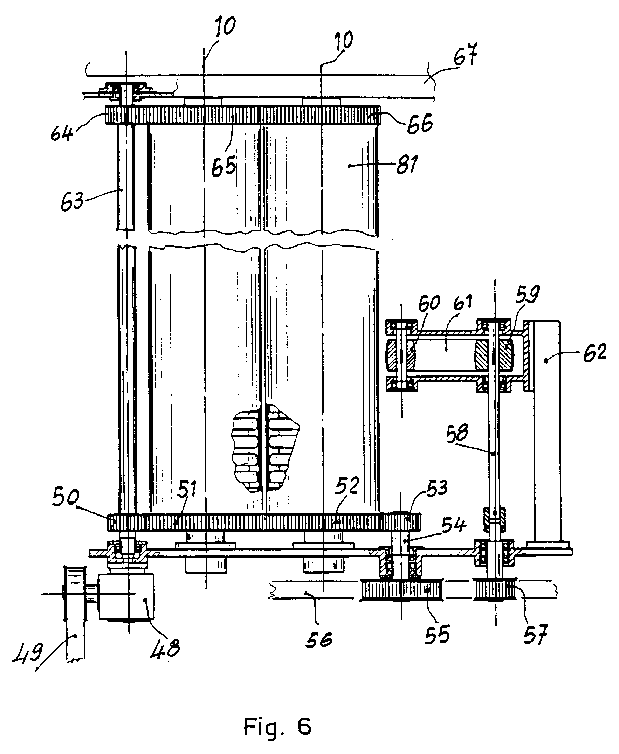

A toothed belt and gear system drives the rolls 2 in a rotational motion around their axes 10 (figure 6).

A motor 47, mounted on the frame 43, transmits through a belt 49 a continuous rotational motion to a speed reducer 48 which meshes with a gear 50.

Gears 51, 52 are mounted rigidly on the rolls 2 and a gear 53, through a drive spindle 54, drives a toothed pulley 55 which, through a toothed belt 56, drives a toothed pulley 57.

The pulley 57, through a drive shaft 58, drives a belt 61 made integral with pulleys 59 and 60. These pulleys and the belt 61 are sustained by a fixed support 62 at a desired height.

A drive shaft 63 is connected at one end to the gear 50 and at the opposite end to a gear 64 meshing with gears 65 and 66 which transmit motion to the rolls 2 at the same time as do the gears 51 and 52.

The frame 38 supporting the entire pressing device is provided with a system for lifting the rails 40 in order to enable the whole assembly to be replaced.

To this end, pistons 70 pushing wheels 68 downwards by means of a cam 69, enable the frame 38 to be lifted and the rails 40 to be removed from their seat.

Figure 3 illustrates the removing device for the pressing rolls 2, which is similar to the feeding device.

The carriage 4 can run on rails 37′ through wheels 35′.

A suction cup unit 18′ is supported by a shaft 19′ which can rotate around its own axis 9′. The carriage 4 shifts the sheet of glass V transversely and lays it on a tipping device 84. The tipping device, which rotates in the direction of arrow F′, places the sheet V in a horizontal position on an output conveyor 85 which transfers the sheet to a successive working operation.

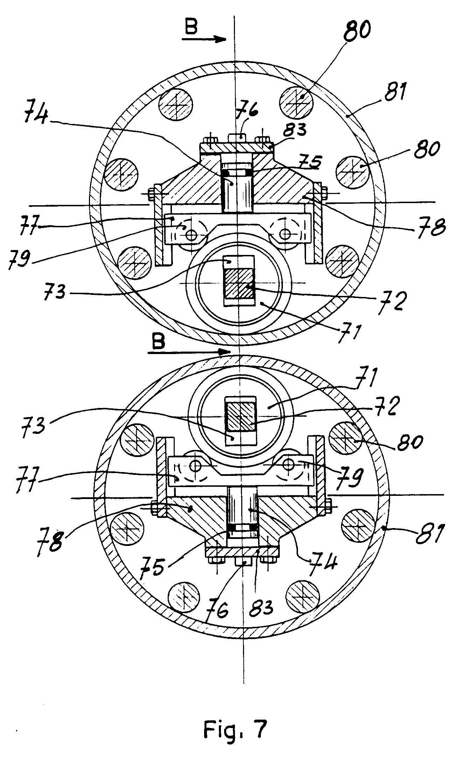

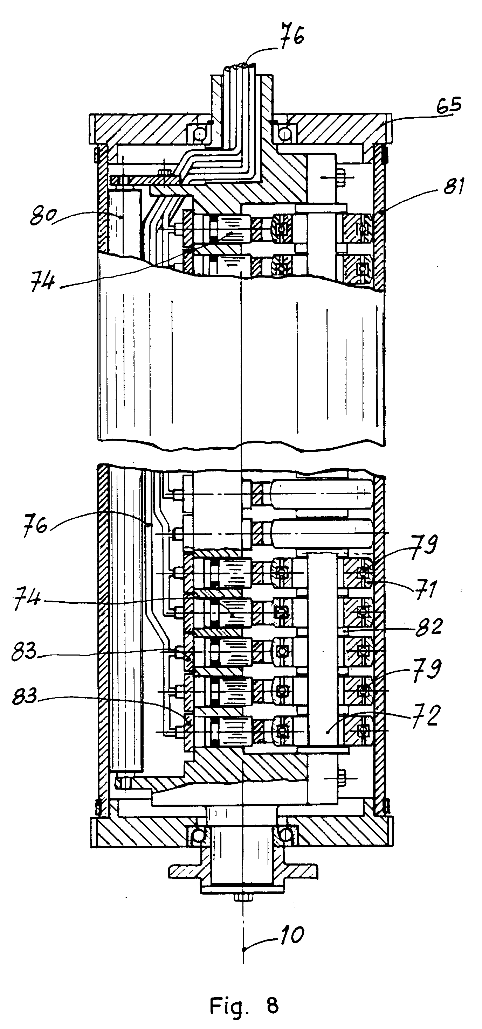

Figure 7 and 8 illustrate an example of embodiment of the pressing rolls 2.

The pressing rolls 2 have on the inside a plurality of pressing cushions 71 abutting one to the other and spaced by the virtue of supports 82, the cushions 71 being able to rotate with their movable part, around a square shaft 72.

The cushions 71 have a slot 73 enabling them to slide horizontally with respect to the square shaft 72, which is fixed and has a length such as to be engaged with the entire plurality of pressing cushions 71.

Each pressing cushion 71 has an individual thrust system formed with a fixed support 78, within which a piston 74 slides, like a pneumatic piston. The piston 74 pushes a cage 77 to move rolls 79 to rest on the surface of the cushion 71. A cover 83 closes the cylinder of the fixed support 78 and a sealing ring 75 prevents seepage of compressed air outwards.

Conduits 76 feed compressed air to the support 78.

On the inner surface of the rolls 2, where the pressure is not directly applied, vertical longitudinal guide rolls 80 maintain under tension a tubular rubber element 81 covering the entire surface of each roll 2.

The plurality of pressing cushions 71, which are preferably fed in groups of three by conduits independent one from the other, enables the pressure to be adjusted on each portion of the sheet of glass V to be pressed.

When the sheet of glass V comes near to the rolls 2, the belts 61 having the same translation speed as the rolls 2 make it easier for the sheet of glass V to enter the rolls with the desired angle.

In the meantime the amount of compressed air has been pre-set to provide the thrust on each group of pressing cushions 71.

As the rolls 2 can rotate by 360° about the axis of the rotatable frame 43, they also in the meantime have been placed at a desired angle and, by virtue of their rotational motion, transport the sheet V to the suction cup unit 18′ which is now ready to receive it.

Once pressing is completed, the carriage 4 takes the sheet V and lays it on the output tipping device 84.

According to the present invention, an automatic apparatus for rapidly pressing a laminated sheet of glass in a continuous line operation has been provided.

This has been obtained by means of the supply and output device and the vertical pressing device, thus eliminating the risk of glass breaking and the need for manual handling.

## Claims

1. An apparatus for pressing a laminated glass/plastic composite (V) having side wings sharply bent in a direction of concavity of said composite, for the manufacture of safety glasses for vehicles, said apparatus comprising a press device rotatable about a substantially vertical axis for pressing said composite, means for moving said composite from a substantially horizontal delivery position to said press device, and means for moving said composite from said press device after said composite has been pressed, characterized in that:
said means for moving said composite to said press device comprise a vertically disposed suction cup unit (18), a vertical supporting shaft (19) supporting said suction cup unit (18) and means (17) for tipping said composite from said horizontal delivery position to said substantially vertical position, enabling said suction cup unit (18) to contact said composite on a face thereof and move said composite to said press device; said means for moving said composite from said press device comprise a vertically disposed suction cup unit (18') and a vertical supporting shaft (19') supporting said suction cup unit (18'), means (84) for tipping said composite from said substantially vertical position in contact with said suction cup unit (18') to said horizontal output position, each said suction cup unit (18, 18') being vertically rotatable around a vertical axis of said respective supporting shaft (19, 19'), whereby said composite can be moved to said press device to enter said press device in a substantially vertical position and at a predetermined entry angle, and moved from said press device in said substantially vertical position.

2. Apparatus according to claim 1, in which said press device comprises a pair of substantially vertically disposed pressing rolls (2) for pressing said composite therebetween, each said pressing roll including on its inside a plurality of pressing cushions (71) abutting one to the other along said pressing roll for imparting pressure to an area of said composite, each said pressing cushion receiving compressed air to press said pressing member toward said composite, wherein
each said plurality of pressing cushions (71) is divided into a plurality of groups of three, each said group of three pressing cushions receiving said compressed air from a separate compressed air conduct (76), whereby each said group of three pressing cushions can be provided with a distinct compressed air pressure to control the pressing force of said pressing cushions along said substantially vertically disposed pressing roll.

3. Apparatus according to claim 2, in which said press device further includes guide means for guiding said glass/plastic composite into said press device between said pressing rolls at a predetermined entry angle, said guide means comprising a pair of driving belts (61), each said belt mounted on a pair of pulleys (59, 60) and each said pulley rotatably mounted on a fixed support (62) adjacent said press device.

4. Apparatus according to claim 1, further comprising a movable carriage (3) having said supporting shaft (19) on said suction cup unit (18) of said means for moving said composite connected thereto, whereby said composite can be moved by said carriage, supporting shaft and suction cup unit to said press means from a delivery location.

5. Apparatus according to claim 1, further comprising a movable carriage (4) having said supporting shaft (19') of said suction cup unit (18') of said means for removing said composite connected thereto, whereby said composite can be moved from said press means by movement of said carriage, supporting shaft and suction cup unit.

## Patentansprüche

1. Vorrichtung zum Pressen eines laminierten Glas/Plastik-Verbundstoffes (V) mit seitlichen Flügeln, die stark in konkaver Richtung des Verbundstoffes gebogen sind, zur Herstellung von Sicherheitsgläsern für Fahrzeuge, wobei die Vorrichtung eine Pressvorrichtung zum Pressen des Verbundstoffes, die um eine im wesentlichen vertikale Achse drehbar ist, und eine Einrichtung zum Transport des Verbundstoffes aus einer im wesentlichen horizontalen Zuführstellung zu der Pressvorrichtung umfaßt, sowie eine Einrichtung zum Transport des Verbundstoffes aus der Pressvorrichtung, wenn der Verbundstoff gepreßt worden ist, dadurch gekennzeichnet, daß:
die Einrichtung zum Transport des Verbundstoffes zur Pressvorrichtung eine vertikal angeordnete Saugnapfeinheit (18), eine vertikale Tragwelle (19), die die Saugnapfeinheit (18) trägt, und eine Einrichtung (17) zum Kippen des Verbundstoffes aus der horizontalen Zuführstellung in die im wesentlichen vertikale Stellung umfaßt, was es ermöglicht, daß die Saugnapfeinheit (18) mit dem Verbundstoff an einer Fläche desselben in Kontakt kommt und den Verbundstoff zur Pressvorrichtung transportiert; wobei die Einrichtung zum Transport des Verbundstoffes aus der Pressvorrichtung eine vertikal angeordnete Saugnapfeinheit (18') und eine vertikale Tragewelle (19'), die die Saugnapfeinheit (18') trägt, umfaßt, sowie eine Einrichtung (84) zum Kippen des Verbundstoffes aus der im wesentlichen vertikalen Stellung in Kontakt mit der Saugnapfeinheit (18') in die horizontale Ausgabestellung, wobei jede Saugnapfeinheit (18, 18') vertikal um eine vertikale Achse der jeweiligen Tragewelle (19, 19') drehbar ist, wodurch der Verbundstoff zur Pressvorichtung transportiert werden kann und in einer im wesentlichen vertikalen Stellung und einem vorgegebenen Eintrittswinkel in die Pressvorrichtung eintritt, und in im wesentlichen vertikaler Stellung aus der Pressvorichtung transportiert werden kann.

2. Vorrichtung nach Anspruch 1, wobei die Pressvorrichtung ein Paar im wesentlichen vertikal angeordneter Preßwalzen (2) zum Pressen des Verbundstoffes zwischen selbigen umfaßt, wobei jede der Preßwalzen an ihrer Innenseite eine Vielzahl von Preßpuffern (71) enthält, die entlang der Preßwalzen aneinandergrenzen und auf einen Bereich des Verbundstoffes Druck ausüben, wobei jedem Preßpuffer Druckluft zugeführt wird, wodurch die Presselemente auf den Verbundstoff gedrückt werden, wobei
jede der Vielzahl von Druckpuffern (71) in eine Vielzahl von Dreiergruppen unterteilt ist, wobei jeder Dreiergruppe der Preßpuffer die Druckluft durch ein separate Druckluftleitung (76) zugeführt wird, wodurch jeder Dreiergruppe der Preßpuffer ein bestimmter Druckluftdruck zugeführt werden kann, um die Preßkraft der Preßpuffer entlang der im wesentlichen vertikal angeordneten Preßwalze zu steuern.

3. Vorrichtung nach Anspruch 2, wobei die Pressvorrichtung weiterhin eine Leiteinrichtung enthält, die den Glas/Plastik-Verbundstoff zwischen den Preßwalzen in einem vorgegebenen Winkel in die Pressvorichtung einleitet, wobei die Leiteinrichtung ein Paar Antriebsriemen (61) umfaßt, wobei jeder Riemen auf einem Paar Riemenscheiben (59, 60) angebracht ist und jede Riemenscheibe drehbar an einer festen Halterung (62) an die Pressvorrichtung angrenzend angebracht ist.

4. Vorrichtung nach Anspruch 1, die weiterhin einen beweglichen Wagen (3) umfaßt, mit dem die Tragwelle (19) an der Saugnapfeinheit (18) der Einrichtung zum Transport des Verbundstoffes verbunden ist, wodurch der Verbundstoff mittels des Wagens, der Tragwelle und der Saugnapfeinheit von einer Zufuhrstelle zur Pressvorichtung transportiert werden kann.

5. Vorrichtung nach Anspruch 1, die weiterhin einen beweglichen Wagen (4) umfaßt, mit dem die Tragwelle (19') der Saugnapfeineinheit (18') der Einrichtung zur Entnahme des Verbundstoffes verbunden ist, wodurch der Verbundstoff mittels der Bewegung des Wagens, der Tragwelle und der Saugnapfeinheit aus der Pressvorrichtung transportiert werden kann.

## Revendications

1. Dispositif destiné au pressage d'un laminé ou feuilleté composite verre/plastique (V) comportant des ailes latérales fortement coudées dans une direction de concavité du composite, pour la fabrication de verres de sécurité destinés à des véhicules, le dispositif comprenant une presse rotative autour d'un axe sensiblement vertical pour le pressage du composite, des moyens pour déplacer le composite depuis une position d'amenée sensiblement horizontale jusqu'à la presse, et des moyens pour déplacer le composite à partir de la presse après pressage de celui-ci, caractérisé en ce que :
les moyens destinés à déplacer le composite sur la presse comprennent une unité à coupelle d'aspiration (18) agencée verticalement, un arbre de support vertical (19) sur lequel est montée la coupelle d'aspiration (18) et des moyens (17) pour faire basculer le composite depuis la position d'amenée horizontale sur la position sensiblement verticale permettant à la coupelle d'aspiration (18) de venir en contact avec le composite sur une de ses faces et de le déplacer vers la presse, les moyens de déplacement du composite à partir de la presse comprennent une coupelle d'aspiration (18') agencée verticalement et un arbre de support vertical (19') supportant la coupelle d'aspiration (18'), des moyens (84) destinés à faire basculer le composite à partir de sa position sensiblement verticale en contact avec la coupelle d'aspiration (18') sur la position de sortie horizontale, chaque coupelle d'aspiration (18, 18') étant rotative verticalement autour d'un axe vertical de l'arbre de support respectif (19, 19'), permettant le déplacement du composite vers la presse pour pénétrer dans celle-ci dans une position sensiblement verticale et selon un angle d'entrée prédéterminé et être déplacé depuis la presse sur une position sensiblement verticale.

2. Dispositif selon la revendication 1, dans lequel la presse comprend une paire de rouleaux de pressage (2) agencés sensiblement verticalement pour presser le composite entre ceux-ci, chaque rouleau de pressage comprenant sur sa partie interne une pluralité de coussinets de pressage (71) venant en butée l'un sur l'autre le long du rouleau de pressage pour transmettre la pression sur une zone du composite, chaque coussinet de pressage recevant de l'air comprimé pour presser l'élément de pressage en direction du composite, dans lequel
chaque pluralité de coussinets de pressage (81) est divisée en une pluralité de groupes de trois coussinets, chaque groupe de trois coussinets de pressage recevant de l'air comprimé à partir d'une conduite d'air comprimé séparée (76), permettant à chaque groupe de trois coussinets de pressage d'être alimenté avec une pression d'air comprimé distincte pour commander la force de pressage des coussinets de pressage le long des rouleaux de pressage agencés sensiblement verticalement.

3. Dispositif selon la revendication 2, dans lequel la presse comprend de plus des moyens de guidage destinés à guider le composite verre/plastique dans la presse entre les rouleaux de pressage selon un angle d'entrée prédéterminé, les moyens de guidage comprenant une paire de courroies d'entraînement (61), chaque courroie étant montée sur une paire de poulies (59, 60) et chaque poulie étant montée de façon rotative sur un support fixe (62) contigu à la presse.

4. Appareil selon la revendication 1, comprenant de plus un chariot mobile (3) avec un arbre de support (19) sur la coupelle d'aspiration (18) des moyens destinés à déplacer le composite raccordé, le composite pouvant alors être déplacé par le chariot, l'arbre de support et la coupelle d'aspiration vers la presse à partir d'une position d'amenée.

5. Dispositif selon la revendication 1, comprenant de plus un chariot mobile (4) avec un arbre de support (19') de la coupelle d'aspiration (18') des moyens destinés à déplacer le composite relié, le composite pouvant être déplacé à partir de la presse par le mouvement du chariot, de l'arbre de support et de la coupelle d'aspiration.
